# EUROPEAN PATENT APPLICATION

(11) **EP 4 318 638 A1**
(43) Date of publication of application: **07.02.2024**
(21) Application number: 21935136.8
(22) Date of filing: 18.11.2021
(51) Int. Cl.: H01M 4/131, H01M 4/485, H01M 4/525, H01M 10/052, H01M 10/0566, H01M 10/0568, H01M 10/0569, H01M 10/0585, H01M 50/109, H01M 50/167, H01M 50/184, H01M 50/414, H01M 50/429, H01M 50/434, H01M 50/547

(54) **COIN-TYPE LITHIUM ION SECONDARY BATTERY**

(30) Priority: 30.03.2021 JP 2021058883
(71) Applicant: NGK Insulators, Ltd., Nagoya city, Aichi 467-8530 (JP)
(72) Inventor: YURA Yukinobu, Nagoya-City, Aichi 467-8530 (JP); OTSUKA Haruo, Nagoya-City, Aichi 467-8530 (JP); MIZUKAMI Shunsuke, Nagoya-City, Aichi 467-8530 (JP)
(74) Representative: Müller-Boré & Partner Patentanwälte PartG mbB
(86) International application number: PCT/JP2021/042442
(87) International publication number: WO 2022/208982

(57) **Abstract**

Provided is a coin-shaped lithium ion secondary battery having a battery performance that is less likely to deteriorate, even when subjected to reflow soldering. The coin-shaped lithium ion secondary battery includes a positive electrode layer, a negative electrode layer, a separator interposed between the positive electrode layer and the negative electrode layer, and an electrolytic solution with which the positive electrode layer, the negative electrode layer, and the separator are impregnated, an exterior body having a coin shape with a bulge on at least one surface and comprising a closed space accommodating the positive electrode layer, the negative electrode layer, the separator, and the electrolytic solution. The coin-shaped lithium ion secondary battery has a main region where all of the positive electrode layer, the negative electrode layer, and the separator overlap and a peripheral region which is devoid of at least one of the positive electrode layer, the negative electrode layer, and the separator, wherein a battery bulge ratio that is the ratio of the maximum thickness of the coin-shaped lithium ion secondary battery in the main region to the minimum thickness of the coin-shaped lithium ion secondary battery in the main region is 1.01 to 1.25.

## Description

### TECHNICAL FIELD

The present invention relates to a coin-shaped lithium ion secondary battery.

### BACKGROUND ART

Coin-shaped lithium ion secondary batteries are widely used in various devices that require charging, and various coin-shaped lithium ion secondary batteries have been proposed. For example, Patent Literature 1 (JP2012-209178A) discloses a coin-shaped battery in which a positive electrode is disposed on the inner surface of a positive electrode case that also functions as an external terminal, a negative electrode is disposed on the inner surface of a negative electrode sealing plate that also functions as an external terminal, and the positive electrode and the negative electrode are facing via a separator. In such a coin-shaped battery, the positive electrode case and the circumferential edge of the sealing plate are sealed via a gasket so as to retain an electrolytic solution therein. In the aforementioned secondary battery, a powder-dispersed positive electrode (so-called coated electrode) produced by applying a positive electrode mixture containing a positive electrode active material, a conductive agent, a binder, and the like, followed by drying, is employed.

Meanwhile, such powder-dispersed positive electrodes generally contain a relatively large amount (e.g., about 10% by weight) of components (binders and conductive agents) that do not contribute to the capacity of battery, resulting in a low packing density of the positive electrode active material, i.e., lithium complex oxide. Accordingly, the powder-dispersed positive electrode should be greatly improved from the viewpoint of the capacity and charge/discharge efficiency. Some attempts have been made to improve the capacity and charge/discharge efficiency by positive electrodes or layers of positive electrode active material composed of lithium complex oxide sintered plate. In this case, since the positive electrode or the layer of positive electrode active material contains no binder or conductive agent, high capacity and satisfactory charge/discharge efficiency can be expected due to a high packing density of lithium complex oxide. For example, Patent Literature 2 (WO2019/221139A) discloses a coin-shaped lithium ion secondary battery comprising a positive electrode plate that is a lithium complex oxide sintered plate, a negative electrode plate that is a titanium-containing sintered plate, a separator, and an electrolytic solution in an exterior body, wherein excellent heat resistance that enables reflow soldering is obtained by using sintered plates as electrodes.

### CITATION LIST

### PATENT LITERATURE

Patent Literature 1: JP2012-209178A
Patent Literature 2: WO2019/221139

### SUMMARY OF INVENTION

In general, in the coin-shaped battery, the main portions of the outer can parts (a case and a cap) in contact with the positive electrode (or the positive electrode current collector) and the negative electrode (or the negative electrode current collector) each have a flat shape in which they look straight when viewed in cross section. However, when attempting to attach terminals to these flat outer can parts to mount them on a substrate by high-temperature reflow soldering, the flat outer can parts abut the electrodes to partially damage the electrodes, resulting in a problem of easy deterioration of battery performance.

The inventors have recently found that the battery performance is less likely to deteriorate even when subjected to reflow soldering by giving a predetermined ratio of bulge to the outer can shape of the coin-shaped lithium ion secondary battery.

Accordingly, it is an object of the present invention to provide a coin-shaped lithium ion secondary battery having a battery performance that is less likely to deteriorate, even when subjected to reflow soldering.

According to the present invention, there is provided a coin-shaped lithium ion secondary battery for reflow soldering comprising:
a positive electrode layer;
a negative electrode layer;
a separator interposed between the positive electrode layer and the negative electrode layer;
an electrolytic solution with which the positive electrode layer, the negative electrode layer, and the separator are impregnated; and
an exterior body having a coin shape with a bulge on at least one surface and comprising a closed space accommodating the positive electrode layer, the negative electrode layer, the separator, and the electrolytic solution,
wherein the coin-shaped lithium ion secondary battery comprises a main region where all of the positive electrode layer, the negative electrode layer; and the separator overlap and a peripheral region which is devoid of at least one of the positive electrode layer, the negative electrode layer, and the separator, and
wherein a battery bulge ratio that is the ratio of a maximum thickness of the coin-shaped lithium ion secondary battery in the main region to a minimum thickness of the coin-shaped lithium ion secondary battery in the main region is 1.01 to 1.25.

### BRIEF DESCRIPTION OF DRAWINGS

Figure 1 is a schematic sectional view of an example of the coin-shaped lithium ion secondary battery of the present invention.
Figure 2 is a SEM image showing an example of a cross section perpendicular to the plate face of an oriented positive electrode plate.
Figure 3 is an EBSD image in the cross section of the oriented positive electrode plate shown in Figure 2.
Figure 4 is an area-based histogram showing the distribution of orientation angles of primary grains in the EBSD image shown in Figure 3.

### DESCRIPTION OF EMBODIMENTS

### Coin-shaped lithium ion secondary battery

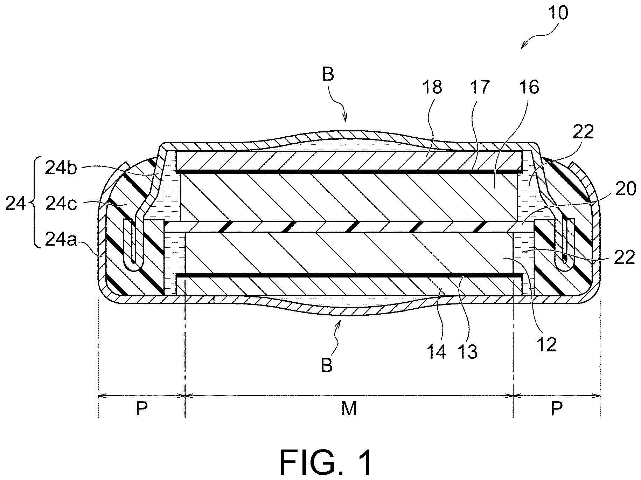

Figure 1 schematically shows an example of the coin-shaped lithium ion secondary battery of the present invention. The lithium ion secondary battery 10 shown in Figure 1 includes a positive electrode layer 12, a negative electrode layer 16, a separator 20, an electrolytic solution 22, and an exterior body 24. The separator 20 is interposed between the positive electrode layer 12 and the negative electrode layer 16. The positive electrode layer 12, the negative electrode layer 16, and the separator 20 are impregnated with the electrolytic solution 22. The exterior body 24 has a closed space, and the closed space accommodates the positive electrode layer 12, the negative electrode layer 16, the separator 20, and the electrolytic solution 22. Further, the exterior body 24 has a coin shape with a bulge on at least one surface. The coin-shaped lithium ion secondary battery 10 has a main region M where all of the positive electrode layer 12, the negative electrode layer 16, and the separator 20 overlap and a peripheral region P which is devoid of at least one of the positive electrode layer 12, the negative electrode layer 16, and the separator 20. Then, a battery bulge ratio that is the ratio of the maximum thickness of the coin-shaped lithium ion secondary battery 10 in the main region M to the minimum thickness of the coin-shaped lithium ion secondary battery 10 in the main region M is 1.01 to 1.25. In this way, the battery performance is less likely to deteriorate, even when subjected to reflow soldering, by giving a predetermined ratio of bulge to the outer can shape of the coin-shaped lithium ion secondary battery 10.

That is, when attempting to attach terminals to flat outer can parts of a conventional battery to mount them on a substrate by high-temperature reflow soldering, the flat outer can parts abut the electrodes to partially damage the electrodes, resulting in a problem of easy deterioration of battery performance. However, the present invention can conveniently overcome this problem. This is probably because the stress that can occur under high temperature (for example, the maximum temperature can reach as high as 260°C) during reflow soldering is relieved by giving a predetermined ratio of bulge to the outer can shape (particularly in the main region M) of the battery, resulting in less damage to the electrodes.

Accordingly, the lithium ion secondary battery 10 is preferably used for reflow soldering. For example, the lithium ion secondary battery 10 can further comprise a positive electrode terminal (not shown) joined to the outer surface of the exterior body 24 closer to the positive electrode layer 12 and a negative electrode terminal (not shown) joined to the outer surface of the exterior body 24 closer to the negative electrode layer 16. In this case, the positive electrode terminal and/or the negative electrode terminal is preferably used for reflow soldering for mounting the coin-shaped lithium ion secondary battery 10 on a substrate. The positive electrode terminal is preferably joined to the positive electrode can 24a of the exterior body 24 by a technique such as diffusion welding and laser welding. Likewise, the negative electrode terminal is preferably joined to the negative electrode can 24b of the exterior body 24 by a technique such as diffusion welding and laser welding.

The exterior body 24 has a coin shape with the bulge on at least one surface. The coin-shaped exterior body 24 more preferably has the bulge on both surfaces. A battery bulge ratio that is the ratio of the maximum thickness of the coin-shaped lithium ion secondary battery in the main region M to the minimum thickness of the coin-shaped lithium ion secondary battery 10 in the main region M is 1.01 to 1.25, preferably 1.02 to 1.23, more preferably 1.02 to 1.20, further preferably 1.03 to 1.18, particularly preferably 1.05 to 1.15. As described above, the main region M refers to a region where all of the positive electrode layer 12, the negative electrode layer 16, and the separator 20 overlap. Accordingly, the main region M is distinguished from the peripheral region P which is devoid of at least one (or all) of the positive electrode layer 12, the negative electrode layer 16, and the separator 20. The maximum thickness and the minimum thickness of the secondary battery 10 in the main region M can be measured using a commercially available laser displacement meter, and the battery bulge ratio may be calculated using the maximum and minimum thicknesses measured. At this time, the battery bulge ratio is calculated by measuring the thickness of the battery in the main region M to each of two straight lines orthogonal to the center of the lithium ion secondary battery 10, and it is desirable to adopt the average of the battery bulge ratios obtained for the two straight lines.

The outer diameter of the lithium ion secondary battery 10 is not specifically limited but is typically 8 to 25 mm, more typically 9.5 to 22 mm, further typically 12.5 to 20 mm.

The positive electrode layer 12 is a layer containing a positive electrode active material. The positive electrode layer 12 may be a powder-dispersed positive electrode (so-called coated electrode) produced by applying a positive electrode mixture containing a positive electrode active material (for example, lithium cobaltate), a conductive agent, a binder, and the like, followed by drying, preferably a ceramic positive electrode plate, more preferably a lithium complex oxide sintered plate. The fact that the positive electrode layer 12 is a ceramic positive electrode plate or a sintered plate means that the positive electrode layer 12 is free from binders or conductive agents. This is because, even if a binder is contained in a green sheet, the binder disappears or burns out during firing. Since the positive electrode layer 12 contains no binder, there is an advantage that deterioration of the positive electrode due to the electrolytic solution 22 can be avoided. The lithium complex oxide constituting the sintered plate is particularly preferably lithium cobaltite (typically, LiCoO₂, which may be hereinafter abbreviated as LCO). Various lithium complex oxide sintered plates or LCO sintered plates are known, and one disclosed in Patent Literature 2 (WO2019/221139) can be used, for example.

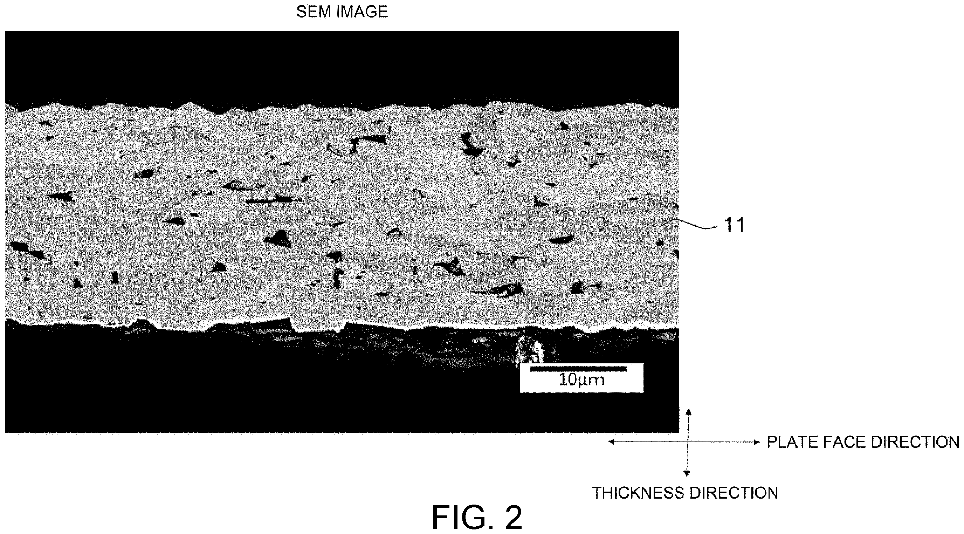

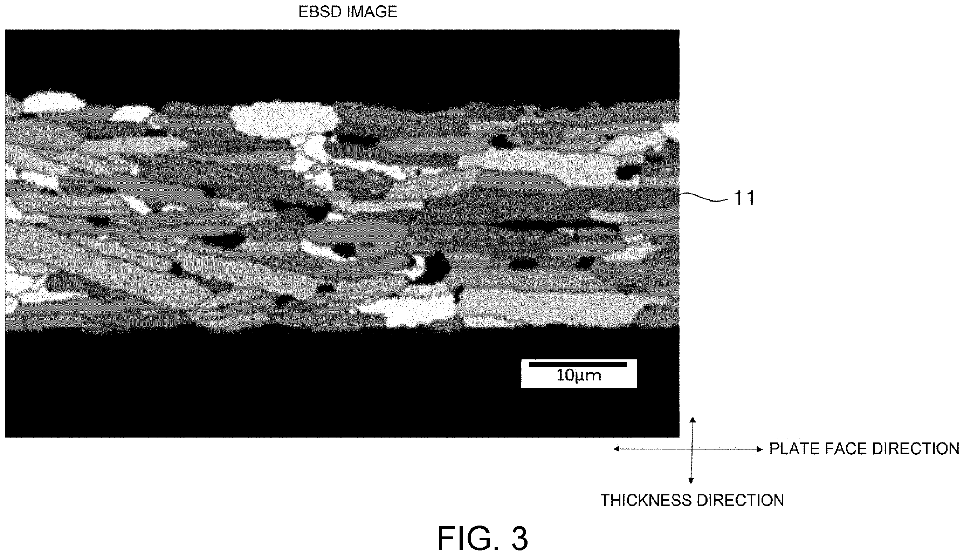

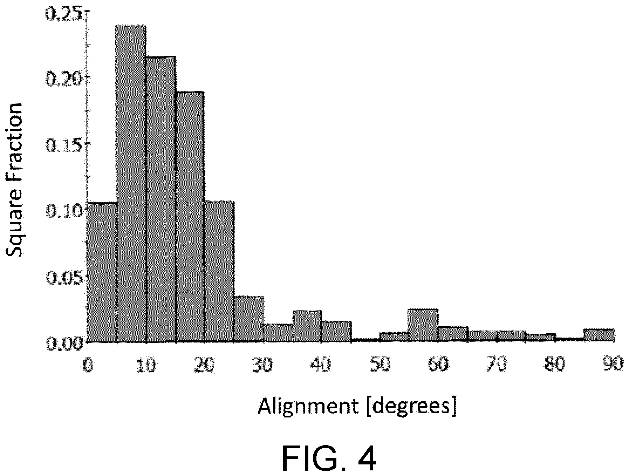

According to a preferable aspect of the present invention, the lithium complex oxide sintered plate constituting the positive electrode layer 12 is an oriented positive electrode plate comprising a plurality of primary grains composed of lithium complex oxide, the plurality of primary grains being oriented at an average orientation angle of over 0° and 30° or less to the plate face of the positive electrode plate. Figure 2 shows an example of a SEM image in a cross section perpendicular to the plate face of the oriented positive electrode plate, and Figure 3 shows an electron backscatter diffraction (EBSD: Electron Backscatter Diffraction) image in a cross section perpendicular to the plate face of the oriented positive electrode plate. Further, Figure 4 shows an area-based histogram showing the distribution of orientation angles of primary grains 11 in the EBSD image shown in Figure 3. In the EBSD image shown in Figure 3, the discontinuity of crystal orientation can be observed. In Figure 3, the orientation angle of each primary grain 11 is indicated by the shading of color. A darker color indicates a smaller orientation angle. The orientation angle is a tilt angle formed by plane (003) of the primary grains 11 to the plate face direction. In Figures 2 and 3, the points shown in black within the oriented positive electrode plate represent pores.

The positive electrode layer 12 that is an oriented positive electrode plate is an oriented sintered body composed of the plurality of primary grains 11 bound to each other. The primary grains 11 are each mainly in the form of a plate but may include rectangular, cubic, and spherical grains. The cross-sectional shape of each primary grain 11 is not particularly limited and may be a rectangular shape, a polygonal shape other than the rectangular shape, a circular shape, an elliptical shape, or a complex shape other than above.

The primary grains 11 are composed of a lithium complex oxide. The lithium complex oxide is an oxide represented by LiₓMO₂ (where 0.05 < x < 1.10 is satisfied, M represents at least one transition metal, and M typically contains one or more of Co, Ni, and Mn). The lithium complex oxide has a layered rock-salt structure. The layered rock-salt structure refers to a crystalline structure in which lithium layers and transition metal layers other than lithium are alternately stacked with oxygen layers interposed therebetween, that is, a crystalline structure in which transition metal ion layers and single lithium layers are alternately stacked with oxide ions therebetween (typically, an α-NaFeO₂ structure, i.e., a cubic rock-salt structure in which transition metal and lithium are regularly disposed in the [111] axis direction). Examples of the lithium complex oxide include LiₓCoO₂ (lithium cobaltate), LiₓNiO₂ (lithium nickelate), LiₓMnO₂ (lithium manganate), LiₓNiMnO₂ (lithium nickel manganate), LiₓNiCoO₂ (lithium nickel cobaltate), LiₓCoNiMnO₂ (lithium cobalt nickel manganate), and LiₓCoMnO₂ (lithium cobalt manganate), particularly preferably LiₓCoO₂ (lithium cobaltate, typically LiCoO₂). The lithium complex oxide may contain one or more elements selected from Mg, Al, Si, Ca, Ti, V, Cr, Fe, Cu, Zn, Ga, Ge, Sr, Y, Zr, Nb, Mo, Ag, Sn, Sb, Te, Ba, Bi, and W.

As shown in Figures 3 and 4, the average of the orientation angles of the primary grains 11, that is, the average orientation angle is over 0° and 30° or less. This brings various advantages as follows. First, since each primary grain 11 lies in a direction inclined from the thickness direction, the adhesion between the primary grains can be improved. As a result, the lithium ion conductivity between a certain primary grain 11 and each of other primary grains 11 adjacent to the primary grain 11 on both sides in the longitudinal direction can be improved, so that the rate characteristic can be improved. Secondly, the rate characteristic can be further improved. This is because, when lithium ions move in and out, the oriented positive electrode plate expands and contracts smoothly since the oriented positive electrode plate expands and contracts more in the thickness direction than in the plate face direction, and thus the lithium ions also move in and out smoothly. Further, when oriented, the effect of uniformizing the stress applied to the electrode plate to the grains present in the electrode during reflow soldering can also be expected. Further, the effect is exhibited more favorably in the case of the aforementioned orientation direction.

The average orientation angle of the primary grains 11 is obtained by the following method. First, three horizontal lines that divide the oriented positive electrode plate into four equal parts in the thickness direction and three vertical lines that divide the oriented positive electrode plate into four equal parts in the plate face direction are drawn in an EBSD image of a rectangular region of 95 µm × 125 µm observed at a magnification of 1000 times, as shown in Figure 3. Next, the average orientation angle of the primary grains 11 is obtained by arithmetically averaging the orientation angles of all the primary grains 11 intersecting at least one of the three horizontal lines and the three vertical lines. The average orientation angle of the primary grains 11 is preferably 30° or less, more preferably 25° or less, from the viewpoint of further improving the rate characteristics. From the viewpoint of further improving the rate characteristics, the average orientation angle of the primary grains 11 is preferably 2° or more, more preferably 5° or more.

As shown in Figure 4, the orientation angles of the primary grains 11 may be widely distributed from 0° to 90°, but most of them are preferably distributed in the region of over 0° and 30° or less. That is, when a cross section of the oriented sintered body constituting the oriented positive electrode plate is analyzed by EBSD, the total area of the primary grains 11 with an orientation angle of over 0° and 30° or less to the plate face of the oriented positive electrode plate (which will be hereinafter referred to as low-angle primary grains) out of the primary grains 11 contained in the cross section analyzed is preferably 70% or more, more preferably 80% or more, with respect to the total area of the primary grains 11 contained in the cross section (specifically, 30 primary grains 11 used for calculating the average orientation angle). Thereby, the proportion of the primary grains 11 with high mutual adhesion can be increased, so that the rate characteristic can be further improved. Further, the total area of grains with an orientation angle of 20° or less among the low-angle primary grains is more preferably 50% or more with respect to the total area of 30 primary grains 11 used for calculating the average orientation angle. Further, the total area of grains with an orientation angle of 10° or less among the low-angle primary grains is more preferably 15% or more with respect to the total area of 30 primary grains 11 used for calculating the average orientation angle.

Since the primary grains 11 are each mainly in the form of a plate, the cross section of each primary grain 11 extends in a predetermined direction, typically in a substantially rectangular shape, as shown in Figures 2 and 3. That is, when the cross section of the oriented sintered body is analyzed by EBSD, the total area of the primary grains 11 with an aspect ratio of 4 or more in the primary grains 11 contained in the cross section analyzed is preferably 70% or more, more preferably 80% or more, with respect to the total area of the primary grains 11 contained in the cross section (specifically, 30 primary grains 11 used for calculating the average orientation angle). Specifically, in the EBSD image as shown in Figure 3, the mutual adhesion between the primary grains 11 can be further improved by above, as a result of which the rate characteristic can be further improved. The aspect ratio of each primary grain 11 is a value obtained by dividing the maximum Feret diameter of the primary grain 11 by the minimum Feret diameter. The maximum Feret diameter is the maximum distance between two parallel straight lines that interpose the primary grain 11 therebetween on the EBSD image in observation of the cross section. The minimum Feret diameter is the minimum distance between two parallel straight lines that interpose the primary grain 11 therebetween on the EBSD image.

The mean diameter of the plurality of primary grains constituting the oriented sintered body is preferably 5 µm or more. Specifically, the mean diameter of the 30 primary grains 11 used for calculating the average orientation angle is preferably 5 µm or more, more preferably 7 µm or more, further preferably 12 µm or more. Thereby, since the number of grain boundaries between the primary grains 11 in the direction in which lithium ions conduct is reduced, and the lithium ion conductivity as a whole is improved, the rate characteristic can be further improved. The mean diameter of the primary grains 11 is a value obtained by arithmetically averaging the equivalent circle diameters of the primary grains 11. An equivalent circle diameter is the diameter of a circle having the same area as each primary grain 11 on the EBSD image.

The lithium complex oxide sintered plate constituting the positive electrode layer 12 preferably has pores. The electrolytic solution can penetrate into the sintered body by the sintered body including pores, particularly open pores, when the sintered body is integrated into a battery as a positive electrode plate. As a result, the lithium ion conductivity can be improved. This is because there are two types of conduction of lithium ions within the sintered body: conduction through constituent grains of the sintered body; and conduction through the electrolytic solution within the pores, and the conduction through the electrolytic solution within the pores is overwhelmingly faster.

The lithium complex oxide sintered plate constituting the positive electrode layer 12 preferably has a porosity of 20 to 60%, more preferably 25 to 55%, further preferably 30 to 50%, particularly preferably 30 to 45%. The stress relief effect by the pores and the increase in capacity can be expected, and the mutual adhesion between the primary grains 11 can be further improved, so that the rate characteristics can be further improved. The porosity of the sintered body is calculated by polishing a cross section of the positive electrode plate with CP (cross-section polisher) polishing, thereafter observing the cross section at a magnification of 1000 times with SEM, and binarizing the SEM image obtained. The average equivalent circle diameter of pores formed inside the oriented sintered body is not particularly limited but is preferably 8 µm or less. The smaller the average equivalent circle diameter of the pores, the mutual adhesion between the primary grains 11 can be improved more. As a result, the rate characteristic can be improved more. The average equivalent circle diameter of the pores is a value obtained by arithmetically averaging the equivalent circle diameters of 10 pores on the EBSD image. An equivalent circle diameter is the diameter of a circle having the same area as each pore on the EBSD image. Each of the pores formed inside the oriented sintered body is preferably an open pore connected to the outside of the lithium complex oxide sintered plate.

The lithium complex oxide sintered plate constituting the positive electrode layer 12 preferably has a mean pore diameter of 0.1 to 10.0 µm, more preferably 0.2 to 5.0 µm, further preferably 0.25 to 3.0 µm. Within such a range, stress concentration is suppressed from occurring locally in large pores, and the stress is easily released uniformly in the sintered body.

The lithium complex oxide sintered plate constituting the positive electrode layer 12 preferably has a thickness of 60 to 600 µm, more preferably 70 to 550 µm, further preferably 90 to 500 µm. The thickness within such a range can improve the energy density of the lithium ion secondary battery 10 by increasing the capacity of the active material per unit area together with suppressing the deterioration of the battery characteristics (particularly, the increase of the resistance value) due to repeated charging/discharging.

The negative electrode layer 16 is a layer containing a negative electrode active material. The negative electrode layer 16 may be a powder-dispersed negative electrode (so-called coated electrode) produced by applying a negative electrode mixture containing a negative electrode active material, a conductive agent, a binder, and the like, followed by drying, preferably a ceramic negative electrode plate, more preferably a titanium-containing sintered plate. The titanium-containing sintered plate preferably contains lithium titanate Li₄Ti₅O₁₂ (which will be hereinafter referred to as LTO) or niobium titanium complex oxide Nb₂TiO₇, more preferably LTO. LTO is typically known to have a spinel structure but can have other structures during charging and discharging. For example, the reaction of LTO proceeds in the two-phase coexistence of Li₄Ti₅O₁₂ (spinel structure) and Li₇Ti₅O₁₂ (rock salt structure) during charging and discharging. Accordingly, the structure of LTO is not limited to the spinel structure.

The fact that the negative electrode layer 16 is a ceramic negative electrode plate or a sintered plate means that the negative electrode layer 16 is free from binders or conductive agents. This is because, even if a binder is contained in a green sheet, the binder disappears or burns out during firing. Since the negative electrode plate is free from binders, high capacity and good charge/discharge efficiency can be achieved by high packing density of the negative electrode active material (for example, LTO or Nb₂TiO₇). The LTO sintered plate can be produced according to the method described in Patent Literature 2 (WO2019/221139).

The titanium-containing sintered plate constituting the negative electrode layer 16 has a structure that a plurality (namely, a large number) of primary grains are bonded. Accordingly, these primary grains are preferably composed of LTO or Nb₂TiO₇.

The thickness of the titanium-containing sintered plate constituting the negative electrode layer 16 is preferably 70 to 500 µm, preferably 85 to 400 µm, more preferably 95 to 350 µm. As the LTO sintered plate is thicker, it is easier to achieve a battery with high capacity and high energy density. The thickness of the titanium-containing sintered plate is determined by measuring the distance between substantially parallel faces of the plate, for example, when the cross section of the titanium-containing sintered plate is observed by SEM (scanning electron microscopy).

The primary grain size that is the average grain size of the plurality of primary grains constituting the titanium-containing sintered plate is preferably 1.2 µm or less, more preferably 0.02 to 1.2 µm, further preferably 0.05 to 0.7 µm. Within such a range, the lithium ion conductivity and the electron conductivity are easily compatible with each other, which contributes to improving the rate performance.

The titanium-containing sintered plate constituting the negative electrode layer 16 preferably has pores. The electrolytic solution can penetrate into the sintered plate by the sintered plate including pores, particularly open pores, when the sintered plate is integrated into a battery as a negative electrode plate. As a result, the lithium ion conductivity can be improved. This is because there are two types of conduction of lithium ions within the sintered body: conduction through constituent grains of the sintered body; and conduction through the electrolytic solution within the pores, and the conduction through the electrolytic solution within the pores is overwhelmingly faster.

The titanium-containing sintered plate constituting the negative electrode layer 16 preferably has a porosity of 20 to 60%, more preferably 30 to 55%, further preferably 35 to 50%. Within such a range, the lithium ion conductivity and the electron conductivity are easily compatible with each other, which contributes to improving the rate performance.

The average pore diameter of the titanium-containing sintered plate constituting the negative electrode layer 16 is 0.08 to 5.0 µm, preferably 0.1 to 3.0 µm, more preferably 0.12 to 1.5 µm. Within such a range, the lithium ion conductivity and the electron conductivity are easily compatible with each other, which contributes to improving the rate performance.

The separator 20 is preferably a separator made of cellulose, polyolefin, polyimide, polyester (e.g., polyethylene terephthalate (PET)), or ceramic. A separator made of cellulose is advantageous since it is inexpensive and has excellent heat resistance. Further, being different from widely used polyolefin separators having poor heat resistance, a separator made of polyimide, polyester (e.g., polyethylene terephthalate (PET)), or cellulose has not only excellent heat resistance of itself but also excellent wettability to γ-butyrolactone (GBL), which is an electrolytic solution component having excellent heat resistance. Accordingly, in the case of using an electrolytic solution containing GBL, the electrolytic solution can be sufficiently penetrated into the separator (without repelling). Meanwhile, a separator made of ceramic is advantageous in that it, of course, has excellent heat resistance and can be produced as one integrated sintered body together with the positive electrode layer 12 and the negative electrode layer 16 as a whole. In the case of a ceramic separator, the ceramic constituting the separator is preferably at least one selected from MgO, Al₂O₃, ZrO₂, SiC, Si₃N₄, AIN, and cordierite, more preferably at least one selected from MgO, Al₂O₃, and ZrO₂.

The electrolytic solution 22 is not specifically limited, and a commercially available electrolytic solution for lithium batteries, such as a solution in which a lithium salt is dissolved in a non-aqueous solvent such as an organic solvent, may be used. In particular, an electrolytic solution with excellent heat resistance is preferable, and the electrolytic solution preferably contains lithium borofluoride (LiBF₄) in the non-aqueous solvent. In this case, the non-aqueous solvent is preferably at least one selected from the group consisting of γ-butyrolactone (GBL), ethylene carbonate (EC) and propylene carbonate (PC), more preferably a mixed solvent composed of EC and GBL, a single solvent composed of PC, a mixed solvent composed of PC and GBL, or a single solvent composed of GBL, particularly preferably a mixed solvent composed of EC and GBL or a single solvent composed of GBL. The non-aqueous solvent has an increased boiling point by containing γ-butyrolactone (GBL), which considerably improves the heat resistance. From such a viewpoint, the volume ratio of EC:GBL in the EC and/or GBL containing non-aqueous solvent is preferably 0:1 to 1:1 (GBL ratio: 50 to 100% by volume), more preferably 0:1 to 1:1.5 (GBL ratio: 60 to 100% by volume), further preferably 0:1 to 1:2 (GBL ratio: 66.6 to 100% by volume), particularly preferably 0:1 to 1:3 (GBL ratio: 75 to 100% by volume). The lithium borofluoride (LiBF₄) to be dissolved in the non-aqueous solvent is an electrolyte having a high decomposition temperature, which also considerably improves the heat resistance. The LiBF₄ concentration in the electrolytic solution 22 is preferably 0.5 to 2 mol/L, more preferably 0.6 to 1.9 mol/L, further preferably 0.7 to 1.7 mol/L, particularly preferably 0.8 to 1.5 mol/L.

The electrolytic solution 22 may further contain vinylene carbonate (VC) and/or fluoroethylene carbonate (FEC) and/or vinyl ethylene carbonate (VEC)) and/or propane sultone (PS) as an additive. Both VC and FEC are excellent in heat resistance. Accordingly, a SEI film having excellent heat resistance can be formed on the surface of the negative electrode layer 16 by the electrolytic solution 22 containing such an additive.

The exterior body 24 has a closed space, and the closed space accommodates the positive electrode layer 12, the negative electrode layer 16, the separator 20, and the electrolytic solution 22. The exterior body 24 is not specifically limited, as long as it adopts a structure that is generally adopted for coin-shaped batteries (for example, see Patent Literatures 1 and 2). Typically, the exterior body 24 includes the positive electrode can 24a, the negative electrode can 24b, and the gasket 24c, wherein the positive electrode can 24a and the negative electrode can 24b are crimped via the gasket 24c to form the closed space. The positive electrode can 24a and the negative electrode can 24b can be made of metals such as stainless steel and are not specifically limited. The gasket 24c can be an annular member made of an insulating resin such as polypropylene and polytetrafluoroethylene and is not particularly limited. Further, a gel solution may be applied to the gasket 24c to improve the sealability. The type of solution used for the gel solution includes heat-curable olefin-based solutions and synthetic rubber-based solutions but is not limited thereto as long as the solvent has viscosity or adhesiveness after volatilization. Further, the application method is also not limited, and the gasket 24c may be dipped in the solution, or the solution may be applied to the gasket 24c with a dispenser or the like.

The lithium ion secondary battery 10 preferably further includes a positive electrode current collector 14 and/or a negative electrode current collector 18. The positive electrode current collector 14 and the negative electrode current collector 18 are not specifically limited but are preferably metal foils such as copper foils and aluminum foils. The positive electrode current collector 14 is preferably interposed between the positive electrode layer 12 and the positive electrode can 24a, and the negative electrode current collector 18 is preferably interposed between the negative electrode layer 16 and the negative electrode can 24b. Further, a positive side carbon layer 13 is preferably provided between the positive electrode layer 12 and the positive electrode current collector 14 for reducing the contact resistance. Likewise, a negative side carbon layer 17 is preferably provided between the negative electrode layer 16 and the negative electrode current collector 18 for reducing the contact resistance. Both the positive side carbon layer 13 and the negative side carbon layer 17 are preferably composed of a conductive carbon and may be formed, for example, by applying a conductive carbon paste by screen printing or the like.

The battery element may be not only in the form of a unit cell of the positive electrode layer 12/the separator 20/the negative electrode layer 16, as shown in Figure 1 but also in the form of a multilayer cell comprising a plurality of unit cells. The multilayer cell is not limited to a flat plate or a stacked-flat plate structure in which layers are stacked and can be various stacked-cell structures including the following examples. In any configuration mentioned as examples below, the cell laminate may form one integrated sintered body as a whole.
- Folded structure: A sheet having a layer structure including unit cells and current collecting layers is folded once or multiple times to form a multilayer (large area) structure.
- Wound structure: A sheet having a layer structure including unit cells and current collecting layers is wound to be integrated, to form a multilayer (large area) structure.
- Multilayer ceramic capacitor (MLCC)-like structure: a lamination unit of current collecting layer/positive electrode layer/ceramic separator layer/negative electrode layer/current collecting layer is repeated in the thickness direction, to form a multilayer (large area) structure, in which a plurality of positive electrode layers are collected on one side (e.g., left side), and a plurality of negative electrode layers are collected on the other side (e.g., right side).

In the portion of the exterior body 24 with the bulge, a gap (internal space) can be formed between the exterior body 24 and the battery elements. That is, they are the gap between the exterior body 24 and the positive electrode layer 12 or the positive electrode current collector 14 and the gap between the exterior body 24 and the negative electrode layer 16 or the negative electrode current collector 18. These gaps may be filled with the electrolytic solution 22, or an elastic member such as a spring, a washer, and a member bent into a corrugated shape may be inserted so as to absorb the expansion and contraction of battery members due to charging and discharging. Such an elastic member is preferably made of metal such as stainless steel in order to ensure the electrical connection with the exterior body 24 (or the positive electrode terminal and the negative electrode terminal joined thereto).

### Method for producing positive electrode plate

The lithium complex oxide sintered plate as a preferable embodiment of the positive electrode layer 12 may be produced by any method and is preferably produced through (a) production of a green sheet containing a lithium complex oxide, (b) production of a green sheet containing an excess-lithium source, optionally, and (c) laminating and firing of the green sheets.

### (a) Production of green sheet containing lithium complex oxide

First, a raw material powder composed of lithium complex oxide is prepared. The powder preferably comprises pre-synthesized platy particles (e.g., LiCoO₂ platy particles) having a composition of LiMOz (M as described above). The volume-based D50 particle diameter of the raw material powder is preferably 0.3 to 30 µm. For example, the LiCoOz platy particles can be produced as follows. Co₃O₄ powder and Li₂CO₃ powder as raw materials are mixed and fired (500 to 900 °C, 1 to 20 hours) to synthesize LiCoO₂ powder. The resultant LiCoOz powder is milled into a volume-based D50 particle diameter of 0.2 µm to 10 µm with a pot mill to yield platy LiCoO₂ particles capable of conducting lithium ions along the faces of the plate. Such LiCoO₂ particles are also produced by a procedure involving grain growth in a green sheet from LiCoOz powder slurry and crushing the green sheet, or a procedure involving synthesis of platy crystals, such as a flux process, a hydrothermal synthesis process, a single crystal growth process using a melt, and a sol gel process. The resultant LiCoO₂ particles are readily cleaved along cleavage planes. The LiCoOz particles may be cleaved by crushing to produce LiCoO₂ platy particles.

The platy particles may be independently used as raw material powder, or a mixed powder of the platy powder and another raw material powder (for example, Co₃O₄ particles) may be used as a raw material powder. In the latter case, it is preferred that the platy powder serves as template particles for providing orientation, and another raw material powder (e.g., Co₃O₄ particles) serves as matrix particles that can grow along the template particle. In this case, the raw powder is preferably composed of a mixed powder in a ratio of template particles to matrix particles of 100:0 to 3:97. When the Co₃O₄ raw material powder is used as the matrix particles, the volume-based D50 particle diameter of the Co₃O₄ raw material powder may be any value, for example, 0.1 to 1.0 µm, and is preferably smaller than the volume-based D50 particle diameter of LiCoOz template particles. The matrix particles may also be produced by heating a Co(OH)₂ raw material at 500 °C to 800 °C for 1 to 10 hours. In addition to Co₃O₄, Co(OH)₂ particles may be used, or LiCoO₂ particles may be used as the matrix particles.

When the raw material powder is composed of 100% of LiCoO₂ template particles, or when LiCoO₂ particles are used as matrix particles, a large (e.g., 90 mm × 90 mm square) flat LiCoO₂ sintered plate can be yielded by firing. Although the mechanism is not clear, since synthesis of LiCoO₂ does not proceed in a firing process, a change in volume or local unevenness of the shape probably does not occur.

The raw material powder is mixed with a dispersive medium and any additive (e.g., binder, plasticizer, and dispersant) to form a slurry. A lithium compound (e.g., lithium carbonate) in an excess amount of about 0.5 to 30 mol% other than LiMO₂ may be added to the slurry to promote grain growth and compensate for a volatile component in a firing process described later. The slurry preferably contains no pore-forming agent. The slurry is defoamed by stirring under reduced pressure, and the viscosity is preferably adjusted into 4000 to 10000 cP. The resultant slurry is formed into a sheet to give a green sheet containing lithium complex oxide. The resultant green sheet is in the form of an independent sheet. An independent sheet (also referred to as a "self-supported film") refers to a sheet (including flakes having an aspect ratio of 5 or more) that can be handled in a singular form independently apart from a support that is different therefrom. In other words, the independent sheet does not refer to a sheet that is fixed to a support that is different therefrom (such as a substrate) and integrated with the support (so as to be inseparable or hard to separate). The sheet is preferably formed by a forming procedure capable of applying a shear force to platy particles (for example, template particles) in the raw material powder. Through this process, the primary grains can have a mean tilt angle of over 0°and 30° or less to the plate face. The forming procedure capable of applying a shear force to platy particles suitably includes a doctor blade process. The thickness of the green sheet containing the lithium complex oxide may be appropriately selected so as to give the above desired thickness after firing.

### (b) Production of green sheet containing excess-lithium source (optional step)

Besides the green sheet containing lithium complex oxide, another green sheet containing an excess-lithium source is then produced, optionally. The excess-lithium source is preferably a lithium compound other than LiMOz. The components other than Li in the compound disappear during firing. A preferable example of such a lithium compound (excess-lithium source) is lithium carbonate. The excess-lithium source is preferably powder and has a volume-based D50 particle diameter of preferably 0.1 to 20 µm, more preferably 0.3 to 10 µm. The lithium source powder is mixed with a dispersive medium and various additives (e.g., a binder, a plasticizer, and a dispersant) to form a slurry. The resultant slurry is defoamed by stirring under reduced pressure, and the viscosity is preferably adjusted into 1000 to 20000 cP. The resultant slurry is formed into a sheet to obtain a green sheet containing an excess-lithium source. The resultant green sheet is also in the form of an independent sheet. The sheet can be formed by any known process and is preferably formed by a doctor blade process. The thickness of the green sheet containing the excess-lithium source is appropriately selected, such that the molar ratio (Li/Co ratio) of the Li content in the green sheet containing the excess-lithium source to the Co content in the green sheet containing the lithium complex oxide is preferably 0.1 or more, more preferably 0.1 to 1.1.

### (c) Lamination and firing of green sheets

The green sheet containing the lithium complex oxide (e.g., LiCoOz green sheet) and the green sheet containing the excess-lithium source (e.g., Li₂CO₃ green sheet), optionally, are sequentially disposed on a bottom setter, and a top setter is disposed on the green sheets. The top and bottom setters are made of ceramic, preferably zirconia or magnesia. If the setters are made of magnesia, the pores tend to get smaller. The top setter may have a porous structure, a honeycomb structure, or a dense structure. If the top setter has a dense structure, the pores in the sintered plate readily get smaller, and the number of pores tends to get larger. As necessary, the green sheet containing the excess-lithium source is preferably cut into a size, such that the molar ratio (Li/Co ratio) of the Li content in the green sheet containing the excess-lithium source to the Co content in the green sheet containing the lithium complex oxide is preferably 0.1 or more, more preferably 0.1 to 1.1.

After the green sheet containing the lithium complex oxide (e.g., a LiCoO₂ green sheet) is placed on the bottom setter, the green sheet may be optionally degreased and then calcined at 600 to 850°C for 1 to 10 hours. In this step, the green sheet containing the excess-lithium source (e.g., a Li₂CO₃ green sheet) and the top setter may be sequentially disposed on the resultant calcined plate.

The green sheets and/or the calcined plate disposed between the setters are optionally degreased and heated (fired) in a medium temperature range (e.g., 700 to 1000°C) to give a lithium complex oxide sintered plate. This firing process may be performed in one or two steps. In the case of firing in two separate steps, the temperature in the first firing step is preferably lower than that in the second firing step. The resultant sintered plate is also in the form of an independent sheet.

### Method for producing negative electrode plate

The titanium-containing sintered plate as a preferable embodiment of the negative electrode layer 16 may be produced by any method. For example, the LTO sintered plate is preferably produced through (a) production of an LTO-containing green sheet and (b) firing of the LTO-containing green sheet.

### (a) Preparation of LTO-containing green sheet

First, raw material powder (LTO powder) composed of lithium titanate Li₄Ti₅O₁₂ is prepared. Commercially available or newly synthesized LTO powder may be used as the raw material powder. For example, powder obtained by hydrolyzing a mixture of titanium tetraisopropoxy alcohol and isopropoxy lithium may be used, or a mixture containing lithium carbonate, titania, or the like may be fired. The raw material powder preferably has a volume-based D50 particle size of 0.05 to 5.0 µm, more preferably 0.1 to 2.0 µm. A larger particle size of the raw material powder tends to increase the size of the pores. Further, in the case where the particle size of the raw material is large, milling (such as pot milling, bead milling, and jet milling) may be performed to a desired particle size. The raw material powder is mixed with a dispersive medium and any additive (e.g., binder, plasticizer, and dispersant) to form a slurry. A lithium compound (e.g., lithium carbonate) in an excess amount of about 0.5 to 30 mol% other than LiMOz may be added to the slurry to promote grain growth and compensate for a volatile component in a firing process described later. The slurry preferably contains no pore-forming agent. The slurry is defoamed by stirring under reduced pressure, and the viscosity is preferably adjusted into 4000 to 10000 cP. The resultant slurry is formed into a LTO-containing green sheet. The resultant green sheet is in the form of an independent sheet. An independent sheet (also referred to as a "self-supported film") refers to a sheet (including flakes having an aspect ratio of 5 or more) that can be handled in a singular form independently apart from a support that is different therefrom. In other words, the independent sheet does not refer to a sheet that is fixed to a support that is different therefrom (such as a substrate) and integrated with the support (so as to be inseparable or hard to separate). The sheet can be formed by any known process and is preferably formed by a doctor blade process. The thickness of the LTO-containing green sheet may be appropriately selected so as to give the above desired thickness after firing.

### (b) Firing of LTO-containing green sheet

The LTO-containing green sheet is placed on the setter. The setter is made of ceramic, preferably zirconia or magnesia. The setter is preferably embossed. The green sheet disposed on the setter is put into a sheath. The sheath is also made of ceramic, preferably alumina. Then, the green sheet in this state is degreased, optionally, and fired to obtain an LTO sintered plate. The firing is preferably performed at 600 to 900°C for 1 to 50 hours, more preferably at 700 to 800°C for 3 to 20 hours. The resultant sintered plate is also in the form of an independent sheet. The heating rate during firing is preferably 100 to 1000°C/h, more preferably 100 to 600°C/h. In particular, the heating rate is preferably employed in a temperature rising process from 300°C to 800°C, more preferably from 400°C to 800°C.

### (c) Summary

As described above, an LTO sintered plate can be preferably produced. In this preferable production method, it is effective to 1) adjust the particle size distribution of the LTO powder and/or 2) change the heating rate during firing, and these are considered to contribute to achieving various properties of the LTO sintered plate.

### Method for coating integrated sintered plate

The entire integrated sintered plate with a three-layer structure of the positive electrode layer, the ceramic separator, and the negative electrode layer that is preferably used for the lithium ion secondary battery of the present invention is preferably coated with a metal oxide layer. Delamination of the integrated sintered plate due to physical impact during battery assembly can be suppressed, and the deterioration in capacity due to storage in a charged state can also be suppressed by coating the entire integrated sintered plate with a metal oxide layer. The integrated sintered plate may be coated with the metal oxide layer by any method, but the metal oxide layer is preferably formed, for example, by i) preparing a coating solution containing a metal compound, ii) immersing the integrated sintered plate in the coating solution to allow the coating solution penetrate therein, iii) taking out the integrated sintered body for drying, and iv) heating the integrated sintered body with the metal compound attached to convert the metal compound into a metal oxide. The coating solution prepared in Procedure i) above is not specifically limited as long as it is a solution containing a metal compound capable of forming a metal oxide layer by heating in a solvent (preferably, an organic solvent), but the metal compound is preferably at least one metal compound selected from the group consisting of Zr, Mg, Al, Nb, and Ti, more preferably metal alkoxides. Preferable examples of such a metal compound include metal alkoxides such as zirconium tetra-n-butoxide, magnesium diethoxide, triisopropoxyaluminum, niobium pentaethoxide, and titanium tetraisopropoxide. In Procedure ii) above, the integrated sintered plate immersed in the coating solution is preferably placed under a vacuum or reduced pressure atmosphere, since the coating solution can penetrate into the integrated sintered plate sufficiently and efficiently. In Procedure iii) above, drying may be performed at room temperature or under heating. In Procedure iv) above, the heating is preferably performed at 300 to 700°C for 2 to 24 hours, more preferably at 350 to 550°C for 4 to 6 hours. Thus, the integrated sintered plate entirely coated with a metal oxide layer is obtained.

### EXAMPLES

The invention will be illustrated in more detail by the following examples.

### Example 1

A coin-shaped lithium ion secondary battery for reflow soldering was produced and evaluated as follows.

### (1) Preparation of LCO green sheet (positive electrode green sheet)

First, Co₃O₄ powder (manufactured by CoreMax Corporation) and Li₂CO₃ powder (manufactured by THE HONJO CHEMICAL CORPORATION) weighed to a molar ratio Li/Co of 1.01 were mixed, and thereafter the mixture was kept at 780°C for 5 hours. The resultant powder was milled into a volume-based D50 of 0.4 µm with a pot mill to yield powder composed of platy LCO particles. The resultant LCO powder (100 parts by weight), a dispersive medium (toluene:isopropanol = 1:1) (100 parts by weight), a binder (polyvinyl butyral: Product No. BM-2, manufactured by SEKISUI CHEMICAL CO., LTD.) (10 parts by weight), a plasticizer (di-2-ethylhexyl phthalate (DOP), manufactured by Kurogane Kasei Co., Ltd.) (4 parts by weight), a dispersant (product name: RHEODOL SP-O30, manufactured by Kao Corporation) (2 parts by weight), and ZrO₂ (manufactured by Sigma-Aldrich Corporation) (1 part by weight) were mixed. The resultant mixture was defoamed by stirring under reduced pressure to prepare a LCO slurry with a viscosity of 4000 cP. The viscosity was measured with an LVT viscometer manufactured by Brookfield. The slurry prepared was formed into a LCO green sheet onto a PET film by a doctor blade process. The thickness of the LCO green sheet was adjusted to 200 µm after firing.

### (2) Preparation of LTO green sheet (negative electrode green sheet)

First, LTO powder (volume-based D50 particle size: 0.06 µm, manufactured by Sigma-Aldrich Japan) (100 parts by weight), a dispersive medium (toluene:isopropanol = 1:1) (100 parts by weight), a binder (polyvinyl butyral: Product No. BM-2, manufactured by SEKISUI CHEMICAL CO., LTD.) (20 parts by weight), a plasticizer (di-2-ethylhexyl phthalate (DOP), manufactured by Kurogane Kasei Co., Ltd.) (4 parts by weight), and a dispersant (product name: RHEODOL SP-O30, manufactured by Kao Corporation) (2 parts by weight) were mixed. The resultant negative electrode raw material mixture was defoamed by stirring under reduced pressure to prepare a LTO slurry with a viscosity of 4000 cP. The viscosity was measured with an LVT viscometer manufactured by Brookfield. The slurry prepared was formed into a LTO green sheet onto a PET film by a doctor blade process. The thickness of the LTO green sheet was adjusted to 100 µm after firing.

### (3) Preparation of MgO green sheet (separator green sheet)

Magnesium carbonate powder (manufactured by Konoshima Chemical Co., Ltd.) was heated at 900°C for 5 hours to obtain MgO powder. The resultant MgO powder and glass frit (CK0199, manufactured by Nippon Frit Co., Ltd.) were mixed at a weight ratio of 4:1. The resultant mixed powder (volume-based D50 particle size: 0.4 µm) (100 parts by weight), a dispersive medium (toluene:isopropanol = 1:1) (100 parts by weight), a binder (polyvinyl butyral: Product No. BM-2, manufactured by SEKISUI CHEMICAL CO., LTD.) (20 parts by weight), a plasticizer (di-2-ethylhexyl phthalate (DOP), manufactured by Kurogane Kasei Co., Ltd.) (4 parts by weight), and a dispersant (product name: RHEODOL SP-O30, manufactured by Kao Corporation) (2 parts by weight) were mixed. The resultant raw material mixture was defoamed by stirring under reduced pressure to prepare a slurry with a viscosity of 4000 cP. The viscosity was measured with an LVT viscometer manufactured by Brookfield. The slurry prepared was formed into a separator green sheet onto a PET film by a doctor blade process. The thickness of the separator green sheet was adjusted to 25 µm after firing.

### (4) Lamination, pressure bonding, and firing

Three LCO green sheets (positive electrode green sheets), the MgO green sheet (separator green sheet), and two LTO green sheets (negative electrode green sheets) were sequentially stacked, and the laminate obtained was pressed at 200 kgf/cm² by CIP (cold isostatic pressing) to pressure-bond the green sheets together. The laminate thus pressure-bonded was punched into a circular plate with a diameter of 10 mm using a punching die. The resultant laminate in a form of circular plate was degreased at 600°C for 5 hours, then heated to 800°C at 1000°C/h, and kept for 10 minutes to fire, followed by cooling. Thus, one integrated sintered plate (integrated electrode) including three layers of the positive electrode layer (LCO sintered layer) 12, the ceramic separator (MgO separator), and the negative electrode layer (LTO sintered layer) was obtained.

### (5) Coating with metal oxide layer

First, 10 g of 2-ethoxyethanol, 0.25 g of acetyl acetone, and 1 g of zirconium tetra-n-butoxide were put into a container, followed by stirring, to give a coating solution. The solution was put into a container, and the integrated sintered plate obtained in Procedure (4) above was immersed therein. The container was put into a desiccator, followed by vacuuming to -95 kPa and standing for 3 minutes. Thereafter, the inside of the desiccator was returned to the atmosphere, and the container containing the integrated sintered plate was taken out. The integrated sintered plate was taken out onto a nonwoven fabric wiper with tweezers, and the coating solution was lightly wiped off, followed by drying at room temperature for 2 hours. The integrated sintered plate after drying was placed on an alumina setter and heated in a medium-sized super cantal furnace (available from KYOWA KONETSU KOGYO CO., LTD.) at 400°C for 5 hours. Thus, an integrated sintered plate (integrated electrode) entirely coated with a metal oxide layer (a layer composed of an oxide of Zr or a complex oxide of Zr and Li) was obtained.

### (6) Production of lithium secondary battery

### (6a) Adhesion of negative electrode layer and negative electrode current collector with conductive carbon paste

Acetylene black and polyimide amide were weighed to a mass ratio of 3:1 and mixed with an appropriate amount of NMP (N-methyl-2-pyrrolidone) as a solvent, to prepare a conductive carbon paste as a conductive adhesive. The conductive carbon paste was screen-printed on an aluminum foil as a negative electrode current collector. The integrated sintered body produced in (5) above was disposed so that the negative electrode layer 16 was located within an undried printing pattern (that is, a region coated with the conductive carbon paste), followed by vacuum drying at 60°C for 30 minutes, to produce a structure with the negative electrode layer and the negative electrode current collector bonded via the negative side carbon layer. The negative side carbon layer had a thickness of 10 µm.

### (6b) Preparation of positive electrode current collector with carbon layer

Acetylene black and polyimide amide were weighed to a mass ratio of 3:1 and mixed with an appropriate amount of NMP (N-methyl-2-pyrrolidone) as a solvent, to prepare a conductive carbon paste. The conductive carbon paste was screen-printed on an aluminum foil as a positive electrode current collector, followed by vacuum drying at 60°C for 30 minutes, to produce a positive electrode current collector with a positive side carbon layer formed on a surface. The positive side carbon layer had a thickness of 5 µm.

### (6c) Assembling of coin-shaped battery

The positive electrode current collector, the positive electrode side carbon layer, the integrated sintered plate (the LCO positive electrode layer, the MgO separator, and the LTO negative electrode layer), the negative electrode side carbon layer, the negative electrode current collector, and a wave washer (manufactured by MISUMI Group Inc.) were accommodated between the positive electrode can and the negative electrode can, which would form a battery case, so as to be stacked in this order from the positive electrode can toward the negative electrode can, and an electrolytic solution was filled therein. Thereafter, the positive electrode can and the negative electrode can were crimped via a gasket to be sealed. Thus, a coin cell-shaped lithium ion secondary battery with a diameter of 12.5 mm and a thickness of 1.0 mm was produced. At this time, a solution obtained by dissolving LiBF₄ in a PC organic solvent to a concentration of 1.5 mol/L was used as an electrolytic solution. Further, 1171G, manufactured by ThreeBond Holdings Co., Ltd. was applied as a sealing material of the gasket. The positive electrode can and the negative electrode can were crimped using a crimping machine, manufactured by Hohsen Corp., in the crimping conditions of a thickness of a shim attached to the knockout pin that pushes the negative electrode can (which will be hereinafter referred to as a knockout shim) of 0 mm and a thickness of a shim on the positive electrode can side of 50 µm.

### (7) Evaluation of battery

The battery produced was evaluated as follows.

### <Outer diameter of battery>

The outer dimensions of the battery were measured using an image dimension measuring machine (IM7000, manufactured by KEYENCE CORPORATION), to determine the outer diameter of the battery.

### <Battery thickness and battery bulge ratio >

The thickness of the battery in the main region (that is, a region where the three layers of positive electrode layer/separator/negative electrode layer overlap) was measured for two straight lines orthogonal to the center of the battery using a laser displacement meter (SI Series, manufactured by KEYENCE CORPORATION). At this time, the minimum thickness and the maximum thickness of the battery in the main region were measured for each of the straight lines. The average of the maximum thicknesses obtained was taken as the thickness of the battery. Further, a value obtained by dividing the maximum thickness of the battery by the minimum thickness of the battery was determined for each of the straight lines, and the average of the values obtained for the two straight lines was taken as the battery bulge ratio.

### <Long-term performance at high temperature>

The battery was mounted on the substrate by reflow soldering with a maximum temperature of 260°C. The battery mounted on the substrate was charged at a constant voltage (CV) of 2.7 V at 25°C and then discharged at 0.5 mA. The discharge capacity at this time was taken as the initial capacity. Then, a total of 100 cycles of a cycle including i) after charging at a constant voltage (CV), and ii) repeating a one-second discharge at 20 mA followed by a two-second discharge rest for a total of 400 times, (that is, one cycle includes i) and ii) above) were performed at an environment of 100°C. The battery after 100 cycles was charged again at a constant voltage (CV) of 2.7 V at 25°C and then discharged at 0.5 mA. The discharge capacity at this time was taken as the capacity after deterioration. It was determined as acceptable when a value obtained by dividing the capacity after deterioration by the initial capacity multiplied by 100 exceeded 95%, and when it did not, it was determined as unacceptable.

### Example 2

A battery was produced and evaluated in the same manner as in Example 1 except that the thickness of the knockout shim that pushes the negative electrode can was changed to 1 mm, and the thickness of the shim on the positive electrode can side was changed to 50 µm, as the crimping conditions.

### Example 3

A battery was produced and evaluated in the same manner as in Example 1 except that the thickness of the knockout shim that pushes the negative electrode can was changed to 2 mm, and the thickness of the shim on the positive electrode can side was changed to 0 µm, as the crimping conditions.

### Example 4

A battery was produced and evaluated in the same manner as in Example 1 except that the thickness of the knockout shim that pushes the negative electrode can was changed to 3 mm, and the thickness of the shim on the positive electrode can side was changed to 0 µm, as the crimping conditions.

### Example 5

A battery was produced and evaluated in the same manner as in Example 1 except for a) to c) below.
a) Five LCO green sheets (positive electrode green sheets), an MgO green sheet (separator green sheet), and four LTO green sheets (negative electrode green sheets) were used in the lamination pressure-bonding step, and the punching diameter of the laminate was changed to 16.5 mm.
b) The outer can of the battery had an outer diameter of 20 mm and a thickness of 1.6 mm.
c) The thickness of the knockout shim that pushes the negative electrode can was changed to 2 mm, and the thickness of the shim on the positive electrode can side was changed to 0 µm, as the crimping conditions.

### Example 6 (Comparison)

A battery was produced and evaluated in the same manner as in Example 1 except that the thickness of the knockout shim that pushes the negative electrode can was changed to 0 mm, and the thickness of the shim on the positive electrode can side was changed to 100 µm, as the crimping conditions.

### Example 7 (Comparison)

A battery was produced and evaluated in the same manner as in Example 1 except that the thickness of the knockout shim that pushes the negative electrode can was changed to 4 mm, and the thickness of the shim on the positive electrode can side was changed to 0 µm, as the crimping conditions.

### Results

The evaluation results for the batteries produced in Examples 1 to 7 were as shown in Table 1.

**[Table 1]**

| | Battery outer diameter (mm) | Maximum thickness of battery (mm) | Crimping conditions | | Battery bulge ratio | Long-term performance at high temperature |
|---|---|---|---|---|---|---|
| | | | Thickness of knockout shim that pushes negative electrode can (mm) | Thickness of shim on positive electrode can side (µm) | | |
| Example 1 | 12 | 1.00 | 0 | 50 | 1.01 | Acceptable |
| Example 2 | 12 | 1.04 | 1 | 50 | 1.05 | Acceptable |
| Example 3 | 12 | 1.08 | 2 | 0 | 1.10 | Acceptable |
| Example 4 | 12 | 1.19 | 3 | 0 | 1.25 | Acceptable |
| Example 5 | 20 | 1.70 | 2 | 0 | 1.06 | Acceptable |
| Example 6* | 12 | 1.00 | 0 | 100 | 1.00 | Unacceptable |
| Example 7* | 12 | 1.20 | 4 | 0 | 1.30 | Unable to implement |

| | | | | | | |
|---|---|---|---|---|---|---|
| The symbol * indicates a Comparative Example. | | | | | | |

## Claims

1. A coin-shaped lithium ion secondary battery for reflow soldering comprising:
a positive electrode layer;
a negative electrode layer;
a separator interposed between the positive electrode layer and the negative electrode layer;
an electrolytic solution with which the positive electrode layer, the negative electrode layer, and the separator are impregnated; and
an exterior body having a coin shape with a bulge on at least one surface and comprising a closed space accommodating the positive electrode layer, the negative electrode layer, the separator, and the electrolytic solution,
wherein the coin-shaped lithium ion secondary battery comprises a main region where all of the positive electrode layer, the negative electrode layer; and the separator overlap and a peripheral region which is devoid of at least one of the positive electrode layer, the negative electrode layer, and the separator, and
wherein a battery bulge ratio that is the ratio of a maximum thickness of the coin-shaped lithium ion secondary battery in the main region to a minimum thickness of the coin-shaped lithium ion secondary battery in the main region is 1.01 to 1.25.

2. The coin-shaped lithium ion secondary battery for reflow soldering according to claim 1, wherein the coin-shaped exterior body has the bulge on both surfaces.

3. The coin-shaped lithium ion secondary battery for reflow soldering according to claim 1 or 2, wherein the lithium ion secondary battery has an outer diameter of 8 to 25 mm.

4. The coin-shaped lithium ion secondary battery for reflow soldering according to any one of claims 1 to 3, wherein the exterior body comprises a positive electrode can; a negative electrode can; and a gasket, wherein the positive electrode can and the negative electrode can are crimped with the gasket interposed therebetween to form the closed space.

5. The coin-shaped lithium ion secondary battery for reflow soldering according to any one of claims 1 to 4, further comprising a positive electrode terminal joined to an outer surface of the exterior body closer to the positive electrode layer; and a negative electrode terminal joined to an outer surface of the exterior body closer to the negative electrode layer.

6. The coin-shaped lithium ion secondary battery for reflow soldering according to any one of claims 1 to 5, wherein the positive electrode terminal and/or the negative electrode terminal is used for reflow soldering for mounting the coin-shaped lithium ion secondary battery on a substrate.

7. The coin-shaped lithium ion secondary battery for reflow soldering according to any one of claims 1 to 6, wherein the positive electrode layer is a ceramic positive electrode plate.

8. The coin-shaped lithium ion secondary battery for reflow soldering according to claim 7, wherein the ceramic positive electrode plate is a lithium complex oxide sintered plate.

9. The coin-shaped lithium ion secondary battery for reflow soldering according to claim 8, wherein the lithium complex oxide is lithium cobaltate.

10. The coin-shaped lithium ion secondary battery for reflow soldering according to any one of claims 1 to 9, wherein the negative electrode layer is a ceramic negative electrode plate.

11. The coin-shaped lithium ion secondary battery for reflow soldering according to claim 10, wherein the ceramic negative electrode plate is a titanium-containing sintered plate.

12. The coin-shaped lithium ion secondary battery for reflow soldering according to claim 11, wherein the titanium-containing sintered plate comprises lithium titanate or niobium titanium complex oxide.

13. The coin-shaped lithium ion secondary battery for reflow soldering according to any one of claims 1 to 12, wherein the separator is made of cellulose, polyimide, polyester, or ceramics selected from the group consisting of MgO, Al₂O₃, ZrO₂, SiC, Si₃N₄, AIN, and cordierite.

14. The coin-shaped lithium ion secondary battery for reflow soldering according to any one of claims 1 to 13, wherein the electrolytic solution is a solution containing lithium borofluoride (LiBF₄) in a non-aqueous solvent consisting of at least one selected from the group consisting of γ-butyrolactone (GBL), ethylene carbonate (EC) and propylene carbonate (PC).
